# EUROPÄISCHE PATENTSCHRIFT

(11) **EP 3 870 393 B1**
(45) Veröffentlichungstag und Bekanntmachung des Hinweises auf die Patenterteilung: **03.12.2025**
(21) Anmeldenummer: 19790482.4
(22) Anmeldetag: 16.10.2019
(51) Int. Cl.: B23Q 11/08

(54) **TELESKOPABDECKUNG FÜR EINE WERKZEUGMASCHINE**
TELESCOPIC COVER FOR A MACHINE TOOL
COUVERCLE TÉLESCOPIQUE POUR MACHINE-OUTIL

(30) Priorität: 23.10.2018 DE 202018106055 U
(43) Veröffentlichungstag der Anmeldung: 01.09.2021
(73) Patentinhaber: igus GmbH, 51147 Köln (DE)
(72) Erfinder: BLASE, Frank, 51429 Bergisch Gladbach (DE); YILMAZ, Bilal, 50739 Köln (DE); HERMEY, Andreas, 53773 Hennef (DE)
(74) Vertreter: Lippert Stachow Patentanwälte Rechtsanwälte
(86) Internationale Anmeldenummer: PCT/EP2019/078037
(87) Internationale Veröffentlichungsnummer: WO 2020/083718

(56) Entgegenhaltungen:
- EP-A1- 2 708 318
- WO-A1-01/15852
- WO-A2-2004/096490
- DE-A1- 19 926 882
- DE-A1- 4 405 247
- JP-A- S 606 394
- JP-U- S4 822 884
- US-A1- 2006 225 848

## Beschreibung

Die Erfindung betrifft eine Teleskopabdeckung für eine Werkzeugmaschine, wobei die Teleskopabdeckung die Merkmale des Oberbegriffs des Anspruchs 1 aufweist.

Aus der WO 2004/096490 A2 geht eine Teleskopabdeckung der vorstehend genannten Art hervor. Die beidendseitig der bogenförmig ausgebildeten Abschnitte angeordneten, zu diesen Abschnitten hin seitlich geöffneten rinnenförmigen Abschnitte sind rechteckig ausgebildet, wobei die beiden rinnenförmigen Abschnitte eines Teleskopglieds in die beiden rinnenförmigen Abschnitte des bezüglich der Verfahrrichtung radial nach außen benachbarten Teleskopglieds eingreifen und darin geführt werden.

Aus der WO 01/15852 A1 ist eine Teleskopabdeckung bekannt, die mehrere Teleskopglieder aufweist, die, in einer Verfahrrichtung geführt, relativ zueinander über einen Verfahrweg hin und her verfahrbar angeordnet sind, wobei die Teleskopglieder sich bezüglich der Verfahrrichtung einander überlappend und bezüglich einer ersten Querrichtung senkrecht zur Verfahrrichtung von einem in einer Verfahrrichtung ersten Teleskopglied bis zu einem in der Verfahrrichtung letzten Teleskopglied kontinuierlich stufenartig ansteigend übereinanderliegend angeordnet sind, wobei die Teleskopglieder jeweils einen ebenen Abschnitt aufweisen. Die ebenen Abschnitte der Teleskopglieder werden durch eine unter ihnen angeordnete Stelleinrichtung geführt.

Die JP S 606394 A offenbart eine Teleskopabdeckung mit mehreren Teleskopgliedern, die, in einer Verfahrrichtung geführt, relativ zueinander über einen Verfahrweg hin und her verfahrbar angeordnet sind, wobei die Teleskopglieder sich bezüglich der Verfahrrichtung einander überlappend angeordnet sind. Die Teleskopglieder weisen jeweils einen ebenen Abschnitt auf, der an seinen beiden in Querrichtung bezüglich der Verfahrrichtung weisenden Seiten in Führungsnuten seitlich angeordneter Führungsblöcke eingreift. Die Teleskopglieder können als erweiterte Teleskopglieder aus jeweils paarig zusammengefassten und bezüglich der Verfahrrichtung beabstandet zueinander angeordneten Teleskopgliedern angesehen werden, wobei bezüglich einer Nullposition, in der sie bezüglich einer Symmetrieebene senkrecht zur Verfahrrichtung symmetrisch angeordnet sind, die zur Symmetrieebene beiden äußeren Teleskopglieder und, schrittweise zur Symmetrieebene hin, die hierzu jeweils benachbarten Teleskopglieder über ihre seitlichen Abschnitte miteinander verbunden sind. Somit sind die seitlichen Abschnitte der jeweils miteinander verbundenen Teleskopglieder zueinander erstreckend verlängert und miteinander zu einer Einheit zusammengefasst, die über ihre bezüglich der Verfahrrichtung gesamte axiale Erstreckung einen gleichen Querschnitt aufweist.

Eine ähnliche Ausführung einer Teleskopabdeckung mit den vorstehend bezüglich der JP S 606394 A genannten Merkmalen, allerdings ohne paarig zusammengefasste und durch seitliche Abschnitte miteinander verbundene Teleskopglieder, ist aus der JP S 4822884 U bekannt.

Die EP 2 708 318 A1 offenbart eine Teleskopabdeckung für eine Werkzeugmaschine, wobei die Teleskopabdeckung mehrere Teleskopglieder aufweist, die, in einer Verfahrrichtung geführt, relativ zueinander über einen Verfahrweg hin und her verfahrbar angeordnet sind, wobei die Teleskopglieder sich bezüglich der Verfahrrichtung einander überlappend und bezüglich einer ersten Querrichtung senkrecht zur Verfahrrichtung von einem in einer Verfahrrichtung ersten Teleskopglied bis zu einem in der Verfahrrichtung letzten Teleskopglied kontinuierlich stufenartig ansteigend übereinanderliegend angeordnet sind. Die Teleskopglieder sind jeweils seitlich in zwei sich in Verfahrrichtung erstreckenden und in einem Abstand voneinander parallel beabstandeten Führungsschienen geführt angeordnet. Die Teleskopglieder sind kastenförmig ausgebildet und weisen seitliche Wände auf, die sich längs seitlicher Führungsebenen erstrecken und die über Querwände miteinander verbunden sind. Darüber hinaus weisen sie ebene Abschnitte auf, die über die Querwände mit den seitlichen Wänden verbunden sind. Die ebenen Abschnitte sind beidendseitig je nach Ausführungsform mit in Verfahrrichtung und parallel zu den Querwänden nach außen sich erstreckenden Flanschen bzw. mit in Verfahrrichtung sich erstreckenden und zu seitlich U-förmig umgebogenen Bereichen der seitlichen Wände geöffneten Rinnen versehen. Die Flansche bzw. Rinnen eines Teleskopglieds sind einem innen benachbart angeordneten Teleskopglied als Führungsschienen zugeordnet und liegen in Einbaulage zugleich zu ihrer Führung an den Flanschen bzw. in den Rinnen eines außen benachbarten Teleskopglieds an. An einer in einer bestimmten Verfahrrichtung weisenden Seite der kastenförmig ausgebildeten Teleskopglieder sind an den Querwänden sich in dieser Verfahrrichtung erstreckende zweite ebene Abschnitte angeordnet. Diese sind über die Querwände mit den Teleskopgliedern verbunden und weisen beidseitig je nach Ausführungsform, wie bei den Teleskopgliedern, Führungsflansche bzw. Führungsrinnen auf. Die zweiten ebenen Abschnitte mit den Flanschen bzw. Rinnen können ihrerseits als weitere Teleskopglieder aufgefasst werden, die über ihre Verbindung mit den Teleskopgliedern jeweils erweiterte und bezüglich der Verfahrrichtung beabstandet zueinander angeordnete Teleskopglieder bilden, wobei bezüglich einer Nullposition, in der sie bezüglich einer Symmetrieebene senkrecht zur Verfahrrichtung symmetrisch angeordnet sind, die zur Symmetrieebene beiden äußeren Teleskopglieder und, schrittweise zur Symmetrieebene hin, die hierzu jeweils benachbarten Teleskopglieder miteinander verbunden sind.

Es werden in DE000008910253U1, DE000003831477A1 und DE000002020109A kastenartige Teleskopglieder mit in der Grundform U-förmigem Querschnitt offenbart. Diese sind aufwendig, schwierig zu montieren und Kraft aufwendig verfahrbar.

Eine Aufgabe der Erfindung ist, eine gattungsgemäße Teleskopabdeckung bereitzustellen, die konstruktiv weniger aufwendiger, einfacher herstellbar und leichter verfahrbar ist.

Die gestellte Aufgabe wird erfindungsgemäß durch die Merkmale des Anspruches 1 gelöst. Vorteilhafte Weiterbildungen werden in den Unteransprüchen beschrieben. Ausgehend von der WO 2004/096490 A2 wird die gestellte Aufgabe bereits dadurch gelöst, dass bei einer Teleskopabdeckung der eingangs genannten Art die Teleskopglieder paarig jeweils zu einem erweiterten Teleskopglied zusammengefasst und bezüglich der Verfahrrichtung beabstandet zueinander angeordnet sind, wobei bezüglich einer Nullposition, in der sie bezüglich einer Symmetrieebene senkrecht zur Verfahrrichtung symmetrisch angeordnet sind, die zur Symmetrieebene beiden äußeren Teleskopglieder und, schrittweise zur Symmetrieebene hin, die hierzu jeweils benachbarten Teleskopglieder über die ihnen zugeordneten beiden Rinnen fest miteinander verbunden sind, wobei die Rinnen in Verfahrrichtung zueinander erstreckend verlängert und miteinander zu einer Einheit zusammengefasst sind, die über ihre bezüglich der Verfahrrichtung gesamte axiale Erstreckung einen gleichen Querschnitt aufweist.

Damit wird eine konstruktiv einfache und wegen der Bogenform dennoch mechanisch stabile Form des Abschnitts der Teleskopglieder vorgeschlagen, der eine tatsächliche Abdeckung für eine abzudeckende Maschinenöffnung bewirkt. Mit dem Begriff durchgehend bogenförmige Form wird gemeint, dass die Form im mathematischen Sinne stetig ist und somit keine Kanten, Brüche, Absätze oder dergleichen aufweist. Vorteilhaft ist die Krümmung der bogenförmigen Form stetig, insbesondere gleichbleibend. Die bogenartige Form kann kreisbogenabschnittsartig, elliptisch oder ellipsoid sein, vorzugsweise gleich einem Abschnitt mit dem kleineren Durchmesser einer Ellipse. Die bogenförmige Form kann bezüglich einer Spiegelsymmetrieebene senkrecht zu einer zweiten Querrichtung senkrecht zur ersten Querrichtung und zur Verfahrrichtung spiegelsymmetrisch ausgebildet sein.

Der Abstand wird somit quer zur Verfahrrichtung überbrückt. Abstand ist hier gleichbedeutend mit Beabstandung, Distanz oder Ausbildung eines Zwischenraums. Abschnitt kann gleich oder etwa gleich der Beabstandung der Führungsschienen eines Führungspaares sein. Dieser Abschnitt kann bezüglich der ersten Querrichtung ein mittlerer Abschnitt sein.

Vorteilhaft bleibt die Überlappung über den gesamten Verfahrweg so erhalten, dass zumindest eine weiter unten beschriebene Abdichtung der Teleskopglieder gewährleistet ist.

Ferner können die Teleskopglieder quer zur Verfahrrichtung zueinander parallel beabstandet angeordnet sein. Die Führung der Teleskopglieder über den Verfahrweg kann linear oder bogenförmig, insbesondere kreisbogenförmig sein.

In einer vorteilhaften Weiterbildung der Teleskopabdeckung können die Teleskopglieder bezüglich einer zweiten Querrichtung senkrecht oder etwa senkrecht zur Verfahrrichtung und ersten Querrichtung parallel zueinander angeordnet sein. Ferner können die Teleskopglieder jeweils zumindest in dem Abschnitt zur Überbrückung des Abstands zwischen den Führungsschienen eine lamellenartige Form mit zwei bezüglich der ersten Querrichtung zueinander parallelen größeren Seitenflächen aufweisen. Die lamellenartige Form kann insbesondere im Verhältnis zu den übrigen Abmessungen des Abschnitts dünn bzw. blattartig ausgebildet sein. Vorteilhaft können von den beiden größeren Seitenflächen die eine als konkave Seitenfläche und die andere als konvexe Seitenfläche ausgebildet sein. Diese Lamellenform ist gegenüber der Kastenform gemäß des zitierten Standes der Technik leichter und weist somit eine geringe zu beschleunigende Masse auf. Dank der Bogenform ist sie mechanisch stabil, insbesondere formstabil. Im Rahmen der Werkstoffeigenschaften und Abmessungen können dank der erfindungsgemäßen Maßnahme gleich einer Blattfeder eine federelastische Bewegung insbesondere in zweiter Querrichtung zum Ausgleich möglicher Verformung beispielsweise durch Beschleunigung ermöglicht werden. Beide Maßnahmen ermöglichen eine leichtere Verfahrbarkeit der Teleskopglieder.

Vorteilhaft können die konkave Seitenfläche zur Begrenzung eines Innenraumes der Werkzeugmaschine und die konvexe Seitenfläche zur Begrenzung einer Umgebung zum Innenraum der Werkzeugmaschine ausgelegt sein. Entsprechend in die Werkzeugmaschine eingebaut, begrenzen die konkave Seitenfläche einen Innenraum der Werkzeugmaschine, aus dem der Arbeitskopf herausragt, und die konvexe Seitenfläche eine Umgebung zur Werkzeugmaschine, in welche der Arbeitskopf durch die Maschinenabdeckung hindurch hineinragt. Selbstverständlich liegt auch eine umgekehrte Zuordnung der Seitenflächen zum Innenraum bzw. zur Umgebung im Rahmen der Erfindung.

Die Teleskopglieder sind bezüglich der ersten Querrichtung, konstruktiv einfach, stufenartig übereinander liegend angeordnet. Die Abfolge der übereinander angeordneten Teleskopglieder ist bezüglich der ersten Querrichtung kontinuierlich. In Einbaulage begrenzt das in der kontinuierlichen stufenartigen Abfolge erste Teleskopglied somit mit der gesamten konkaven Seitenfläche seines Abschnitts den Innenraum der Werkzeugmaschine, während das in der kontinuierlichen stufenartigen Abfolge letzte Teleskopglied mit der gesamten konvexen Seitenfläche seines Abschnitts die Umgebung zur Werkzeugfamilie begrenzt.

Wie üblich, kann zumindest das bezüglich der Verfahrrichtung mittig oder etwa mittig angeordnete Teleskopglied eine Fensteröffnung zur Durchführung eines Arbeitskopfes der Werkzeugmaschine auf dem Innenraum derselben heraus aufweisen. Mit Fensteröffnung ist eine übliche Durchgangsöffnung für eine Teleskopabdeckung gemeint. Vorzugsweise ist bei einer ungeraden Anzahl an Teleskopgliedern vorgesehen, dass zumindest dass bezüglich der Abfolge mittlere Teleskopglied die Fensteröffnung aufweist.

Die Führungsschienen sind jeweils als Rinne ausgebildet sein. Diese ist in Einbaulage zu dem jeweils zugeordneten Teleskopglied hin seitlich geöffnet ausgebildet. Die Rinne ist bezüglich einer mittigen sich in Verfahrrichtung erstreckende Längsachse der Teleskopabdeckung radial nach innen seitlich geöffnet ausgebildet. Zur sicheren Führung können sie ein bezüglich der Verfahrrichtung U-förmiges Querschnittsprofil aufweisen.

Die Teleskopglieder weisen zum Eingriff in die Rinne der jeweils zugeordneten Führungsschienen jeweils bezüglich der ersten Querrichtung beidendseitig einen weiteren Abschnitt auf. Somit kann der weitere Abschnitt als Führungsabschnitt ausgebildet sein. Der weitere Abschnitt ist sich in erster Querrichtung von dem bogenförmigen Abschnitt weg erstreckend angeordnet. Günstig kann der weitere Abschnitt der Teleskopglieder dem Querschnitt der ihm zugeordnete Führungsschiene angepasst ausgebildet sein.

In einer anderen besonderen Ausführungsform der Teleskopabdeckung ist der weitere Abschnitt der Teleskopglieder als seitlich geöffnete Rinne mit einem bezüglich der Verfahrrichtung ringabschnittsartigen Querschnitt ausgebildet. Die Rinne erstreckt sich in erster Querrichtung von dem bogenförmigen Abschnitt weg. Die beiden Rinnen eines Teleskopgliedes sind dem bezüglich der Verfahrrichtung der Teleskopabdeckung radial nach innen benachbarten Teleskopglied als Führungsschienen zugeordnet. Die beiden Rinnen eines Teleskopgliedes können somit dem zu ihm benachbarten Teleskopglied zugeordnet sein, dessen konvexe Seitenfläche ihm zugewandt ist bzw. welches sich mit seiner konvexen Seitenfläche zu ihm hin wölbt.

Die beiden Rinnen eines Teleskopgliedes greifen in Einbaulage zugleich zu ihrer Führung in die beiden Rinnen des bezüglich der Verfahrrichtung der Teleskopabdeckung radial nach außen benachbarten Teleskopglieds ein. Die beiden Rinnen können somit dem zu ihm benachbarten Teleskopglied zugeordnet sein, dessen konkave Seitenfläche ihm zugewandt ist bzw. welches sich mit seiner konvexen Seitenfläche von ihm weg wölbt.

Die Teleskopglieder sind paarweise jeweils zu einem erweiterten Teleskopglied zusammengefasst. Die paarig zusammengefassten Teleskopglieder können bezüglich der Verfahrrichtung beabstandet zueinander angeordnet sein. Es kann über den Verfahrweg eine Nullposition vorgesehen, in der die Teleskopglieder bezüglich einer mittigen Symmetrieebene senkrecht zur Verfahrrichtung symmetrisch zueinander angeordnet sind. Konstruktiv vorteilhaft können die zur Symmetrieebene beiden äußeren Teleskopglieder über ihre weiteren Abschnitte unter Ausbildung des erweiterten Teleskopgliedes fest miteinander verbunden angeordnet sein. Hieran anschließend können die zu den äußeren Teleskopgliedern benachbarten Teleskopglieder ebenfalls zu einem erweiterten Teleskopglied zusammengefasst sein. Hieran anschließend können die in Richtung zu der Symmetrieebene hin benachbarten Teleskopglieder zu einem erweiterten Teleskopglied zusammengefasst sein und so weiter. Da hier jeweils zwei Teleskopglieder zu einem erweiterten Teleskopglied zusammengefasst werden, sollte eine optimale Anzahl an Teleskopgliedern der Teleskopabdeckung einen geraden Zahlenwert haben. Damit kann das aus den beiden inneren Teleskopgliedern zusammengefasste innere erweiterte Teleskopglied die Fensteröffnung für den Maschinenkopf aufweisen. In den übrigen hierzu zur Verfahrrichtung radial weiter außen angeordneten erweiterten Teleskopliedern sind die zugehörigen beiden Teleskopglieder zweckmäßig in einem Abstand voneinander beabstandet, der größer als die bezüglich der Verfahrrichtung axiale Erstreckung der Fensteröffnung ist.

Zur Überbrückung des Abstandes sind die einander zugeordneten beiden weiteren Abschnitte miteinander verbunden. Hierzu sind diese weiteren Abschnitte sich quasi in Verfahrrichtung zueinander erstreckend verlängert und miteinander einstückig verbunden ausgebildet. Damit sind die beiden weiteren Abschnitte zu einer Einheit zusammengefasst. Diese weist über ihre bezüglich der Verfahrrichtung gesamte axiale Erstreckung einen gleichen Querschnitt auf. Der axiale Abstand kann gleich dem Abstand der zu den paarig miteinander Teleskopgliedern äquivalenten unverbundenen Teleskopgliedern in der Nullposition sein. Damit weisen alle erweiterten Teleskopglieder jeweils eine Durchgangsöffnung auf, die jedoch bezüglich der Verfahrrichtung größer als die Fensteröffnung des inneren erweiterten Teleskopgliedes ist.

Üblich können die Teleskopglieder jeweils dichtend zu den in zweiter Querrichtung benachbarten Teleskopgliedern und/oder dichtend zu den jeweils zugeordneten Führungsschienen angeordnet sein. Es kann zumindest an einem von zwei benachbarten Teleskopgliedern bezüglich der Verfahrrichtung vorzugsweise beidendseitig jeweils eine Dichtungslippe vorgesehen sein. Diese kann in Einbaulage in die Teleskopabdeckung dichtend an dem anderen Teleskopglied und/oder dichtend an der jeweils zugeordneten Führungsschiene anliegen. Überdies kann die Dichtungslippe fußseitig dichtend an der Führungsschiene anliegen. Die Dichtungslippe eines jeden Teleskopgliedes kann sich in einer Richtung parallel oder etwa parallel zur zweiten Querrichtung von dessen konkaven Seitenflächen zu der konvexen Seitenfläche des benachbarten Teleskopliedes hin erstrecken.

Insbesondere können die Teleskopglieder bezüglich der zweiten Querrichtung über einen Spalt beabstandet zu den jeweils benachbarten Teleskopgliedern angeordnet sein. Die dichtend zwischen den benachbarten Teleskopgliedern wirkende Dichtungslippe kann dichtend den Spalt überbrücken. Die kann in Einbaulage dichtend an dem anderen Teleskopglied und/oder dichtend an den jeweils zugeordneten Führungsschienen anliegen. Die Spaltbreite kann kleiner als die Breite, vorzugsweise kleiner als die halbe Breite der Teleskopglieder jeweils in zweiter Querrichtung sein.

Die Teleskopglieder können beispielsweise über Mitnehmer miteinander verbunden sein. Hierbei können die Teleskopglieder nacheinander von dem jeweils benachbarten voreilenden Teleskopglied mitgenommen werden, wenn dieses ordnungsgemäß ausgefahren ist. Nachteilig können hierbei Anschlagsimpulse auftreten. Vorzugsweise sind die Teleskopglieder bezüglich der Verfahrrichtung miteinander bewegungsgekoppelt angeordnet. Die Teleskopglieder können über eine Scherenmechanik mit mindestens einer Gelenkkette miteinander bewegungsgekoppelt angeordnet sein. Mittels der Scherenmechanik können alle Glieder gleichzeitig bewegt werden, wodurch keine Anschlagimpulse entstehen. Bekanntlich kann durch die Bewegungskopplung über die Scherenmechanik die Bewegung der einzelnen Teleskopglieder synchronisiert werden.

Die Teleskopabdeckung kann einen Rahmen aufweisen, an dem die Führungsschienen und die äußeren Teleskopglieder in ordnungsgemäßer Position bewegungsfest gehalten angeordnet sind.

Gewicht einsparend können die Teleskopglieder jeweils zumindest an ihrer konkaven Seitenfläche eine rippenartige Verstärkungsstruktur aufweisen. Diese Maßnahme bewirkt eine Minderung des zu beschleunigenden Gewichts und ferner eine Erhöhung einer Verwindungssteifigkeit der Verstärkungsrippen.

Herstellungsseitig und montageseitig vorteilhaft, können die Teleskopglieder jeweils einstückig aus Kunststoff gefertigt sein. Sie können überdies jeweils mittels additiver Fertigung hergestellt sein. Die Teleskopglieder können im Prinzip mittels aller bekannter additiven Fertigungsverfahren insbesondere für Kunststoffe gefertigt werden. Hierzu zählen Stereolithographie, Poly-Jetting, Fused Depositing Modeling (FDM) und Laser Sintern.

Vorzugsweise kann Selektives Lasersintern (SLS) für die Erstellung der Teleskopglieder eingesetzt werden. Hierzu kann schrittweise oder schichtweise pulverförmiger Werkstoff auf eine Bauplattform aufgezogen beziehungsweise aufgebracht werden. Die Schichtkontur des zu erstellenden Teleskopglieds wird in jede Pulverschicht durch einen Laser gesintert bzw. eingeschmolzen. Als Vorteile des Selektiven Lasersinterns gegenüber anderen additiven Verfahren ist beispielsweise zu nennen, dass Hinterschneidungen (hinterschnittene Konturen) unaufwändig gefertigt werden können und dass ferner keine weiteren Stützkonturen zur Fertigung der Bauteilkontur nötig sind. Der Einsatz des selektiven Lasersinterns erlaubt somit eine unaufwändige Realisierung auch komplizierter Formen.

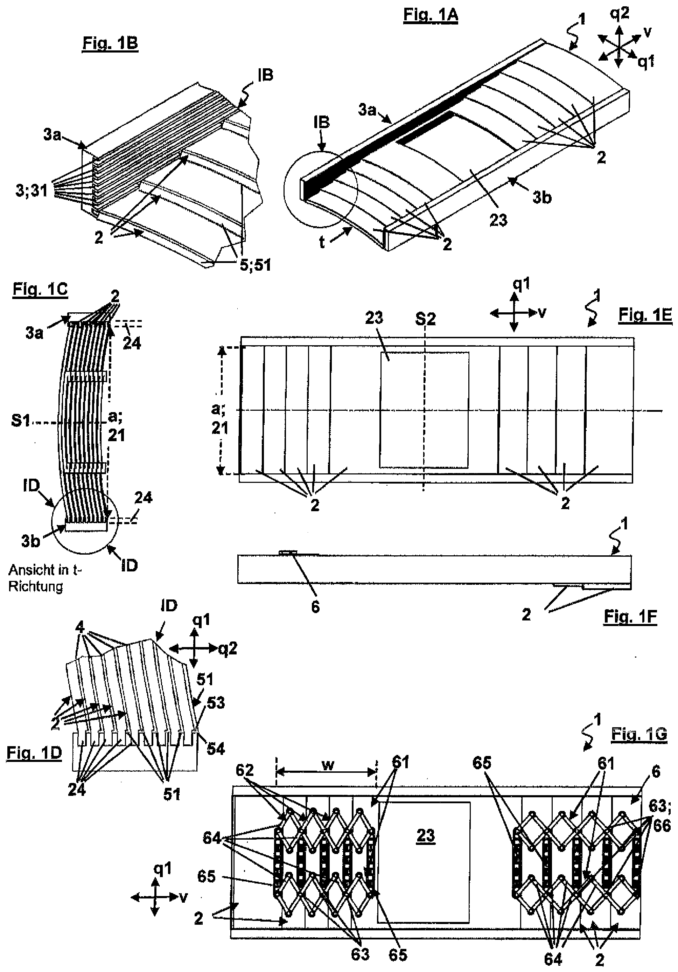

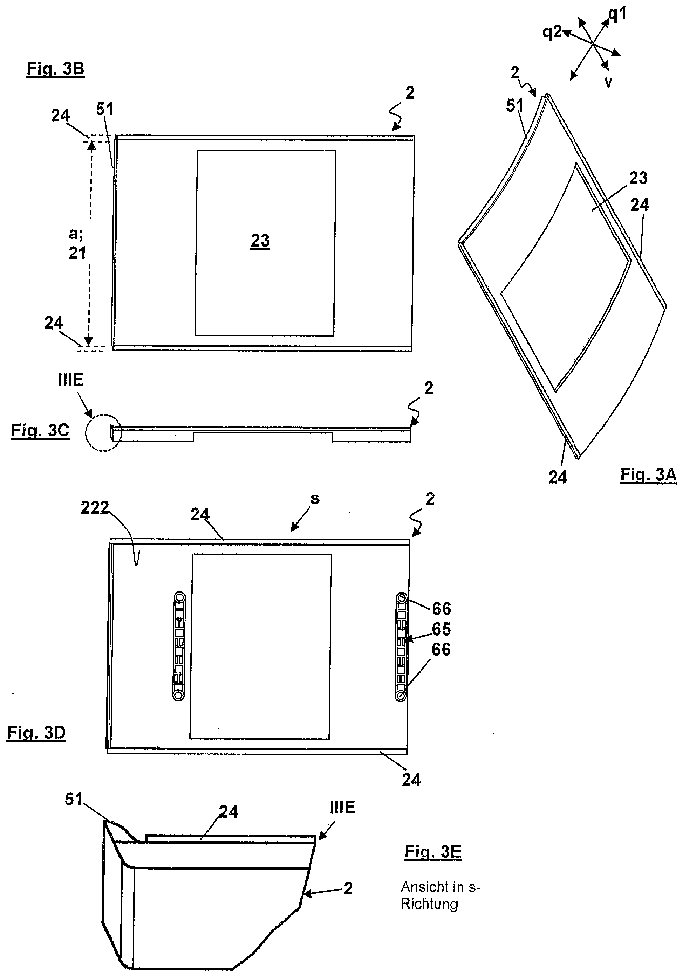

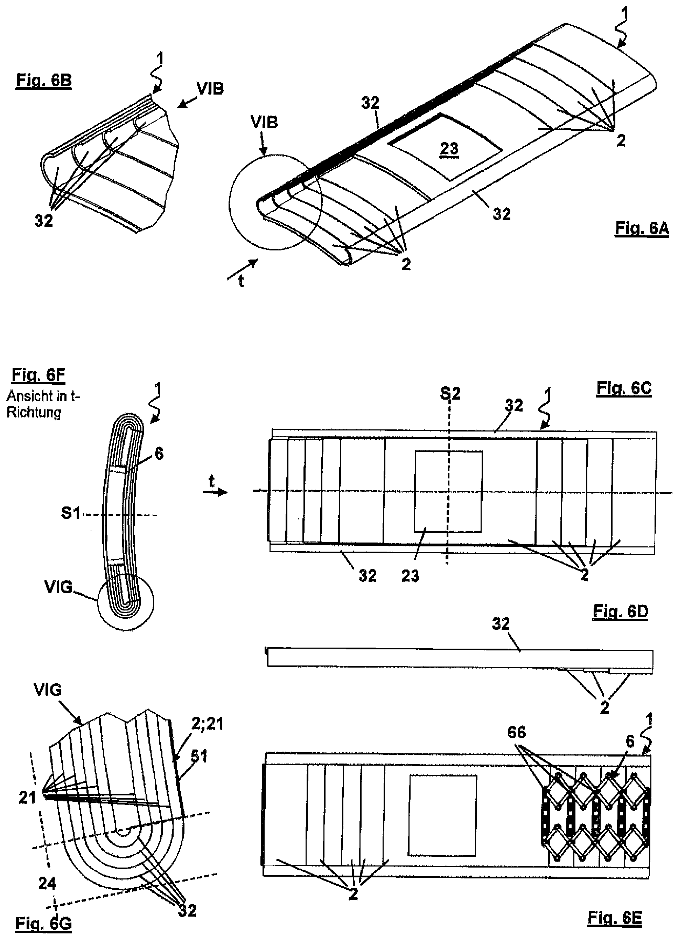

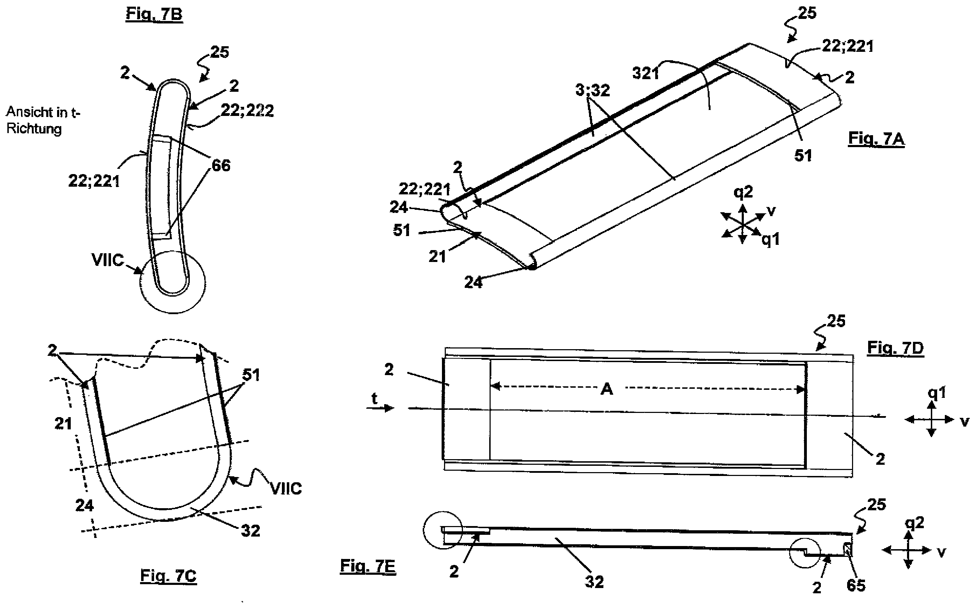

Weitere Einzelheiten und Vorteile der Erfindung werden im Folgenden, ohne Einschränkung des Schutzumfangs, durch die Beschreibung der in den Figuren 6A-6G und 7A-/E gezeigten Ausführungsform ersichtlich. Die in den Figuren 1A-1G, 2A-2E, 3A-3E, 4A-4C und 5A-5C dargestellten und in den betreffenden Beschreibungstexten beschriebenen Ausführungsformen von Teleskopabdeckungen werden als nicht zur vorliegenden Erfindung gehörig angesehen. Sie dienen lediglich zur Erläuterung von Merkmalen, die sich bei der in den Figuren 6A-6G und 7A-7E gezeigten Ausführungsform wiederfinden. In der Beschreibung sind sämtliche Begrifflichkeiten zur Beschreibung einer Örtlichkeit, wie oben, unten, vorn, hinten, rechts und links, so gemeint, wie sie in der jeweiligen Figur selbst gezeigt sind, es sei denn, es ist eigens anders definiert. Es zeigen
- FIG.1A-1G: in unterschiedlichen Ansichten und Teilansichten jeweils eine Darstellung einer Ausführungsform einer Teleskopabdeckung mit mehrere Teleskopgliedern und zugeordneten Führungsschienen,
- FIG.2A-2D: in unterschiedlichen Ansichten und Teilansichten jeweils eine Darstellung eines Teleskopglieds der Teleskopabdeckung gemäß Figuren 1A-1G,
- FIG.2E: eine Seitenansicht eines Teleskopglieds ähnlich dem Teleskopglied gemäß Figuren 2A-2D, jedoch mit einer strukturierten Oberfläche,
- FIG.3A-3E: in unterschiedlichen Ansichten und Teilansichten jeweils eine Darstellung eines mittleren Teleskopglieds der Teleskopabdeckung gemäß Figuren 1A-1G,
- FIG.4A-4B: eine Seitenansicht bzw. eine Teilansicht einer weiteren Ausführungsform der Teleskopabdeckung,
- FIG.4C: eine stirnseitige Ansicht von zu einem Block zusammengefasster Führungsschienen,
- FIG.5A-5B: eine Seitenansicht bzw. eine Teilansicht einer weiteren Ausführungsform der Teleskopabdeckung,
- FIG.5C: eine stirnseitige Ansicht von zu einem Block zusammengefasster Führungsschienen,
- FIG.6A-6G: in unterschiedlichen Ansichten und Teilansichten jeweils eine Darstellung einer zur Erfindung gehörigen Ausführungsform einer Teleskopabdeckung mit mehrere Teleskopgliedern und
- FIG.7A-7E: in unterschiedlichen Ansichten und Teilansichten jeweils eine Darstellung eines Teleskopglieds der Teleskopabdeckung gemäß Figuren 6A-6G.

In den Figuren 1-7 sind in unterschiedlichen Seitenansichten, Teilansichten, Schnittansichten und Einzeldarstellungen unterschiedliche Ausführungsformen einer Teleskopabdeckung 1 bzw. Bauteile derselben für eine hier nicht gezeigte Werkzeugmaschine gezeigt. Die Teleskopabdeckung 1 weist mehrere Teleskopglieder 2 auf, die in einer Verfahrrichtung v relativ zueinander über einen Verfahrweg w hier linear geführt, hin und her verfahrbar angeordnet sind. Sie sind sich bezüglich der Verfahrrichtung v einander überlappend angeordnet. Die Überlappung bleibt über den gesamten Verfahrweg w erhalten. Die Teleskopglieder 2 sind jeweils seitlich in zwei sich in Verfahrrichtung v erstreckenden Führungsschienen 3 geführt angeordnet. Die Führungsschienen 3 sind in einem Abstand a quer zur Verfahrrichtung v parallel voneinander beabstandet angeordnet.

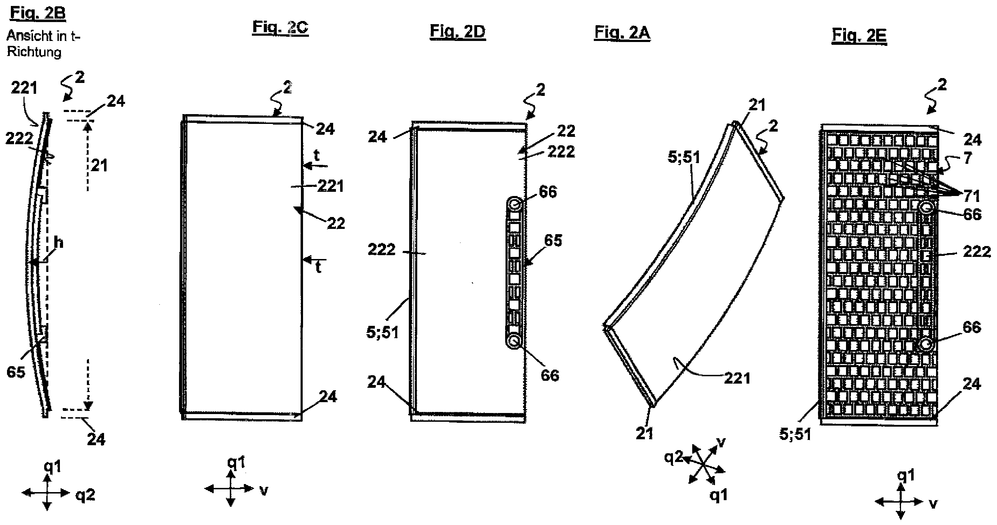

Die Teleskopglieder 2 überbrücken jeweils den Abstand a quer zur Verfahrrichtung v. Wie beispielsweise den Figuren 1A, 1C, 2A, 2B und 3A entnehmbar, weisen die Teleskopglieder 2 jeweils einen Abschnitt 21 auf, mit dem sie den Abstand a zwischen den ihnen zugeordneten beiden Führungsschienen 3 überbrücken. Die Überbrückung erfolgt quer zur Verfahrrichtung v. Sie erfolgt unter Ausbildung eines bezüglich einer ersten Querrichtung q1 senkrecht zur Verfahrrichtung v durchgehend bogenförmigen Querschnitts. Die Bogenform ist hier flach und ferner stetig, d.h. ohne Ausbildung von Unterbrechungen, Kanten, Brüche oder Sprüngen. Die Bogenform ist elliptisch und zwar gleich einem Bereich einer Ellipse, in dem dieselbe den kleineren Durchmesser aufweist. Sie weist eine in Figur 2B eingezeichnete Höhe h auf, die ein Mehrfaches ihrer Erstreckung in zweiter Querrichtung q2 ist. Beispiel gebend, ist gemäß Figur 2B die Erstreckung e in zweiter Querrichtung q2 etwa zehnmal so groß wie die Höhe h. Die Bogenform ist bezüglich einer mittigen Spiegelsymmetrieebene S1 senkrecht zur ersten Querrichtung q1 spiegelsymmetrisch. Dieser Abschnitt 21 ist bezüglich der ersten Querrichtung q1 ein mittlerer Abschnitt. Die Teleskopglieder 2 sind bezüglich der zweiten Querrichtung q2 parallel voneinander angeordnet. Die Teleskopglieder 2 bleiben über den gesamten Verfahrweg v bezüglich der Verfahrrichtung sich überlappend angeordnet. Die Teleskopglieder 2 weisen jeweils bezüglich der zweiten Querrichtung q2 einen rechteckigen Grundriss auf.

Die Teleskopglieder 2 weisen in dem Abschnitt A zur Überbrückung des Abstands a zwischen den Führungsschienen 3 eine flache lamellenartige Form mit zwei bezüglich der ersten Querrichtung q1 zueinander parallelen größeren Seitenflächen 22 auf. Infolge der elliptischen Krümmung ist die eine Seitenfläche 22 als konkave Seitenfläche 221 und die andere Seitenfläche 22 als konvexe Seitenfläche 222 ausgebildet. Die konkave Seitenfläche 222 ist zur Begrenzung eines Innenraumes der hier nicht gezeigten Werkzeugmaschine und die konvexe Seitenfläche 221 ist zur Begrenzung einer Umgebung zum Innenraum der Werkzeugmaschine ausgelegt. In den hier gezeigten Ausführungsformen der Maschinenabdeckung 1 gemäß den Figuren 1-5 weist das bezüglich der Verfahrrichtung v mittige Teleskopglied 2 eine Fensteröffnung 23 zum Durchgriff eines vorgesehenen Arbeitskopfes der Werkzeugmaschine durch die Abdeckung 1 auf.

Die Teleskopglieder 2 sind bezüglich der ersten Querrichtung q1 in einer kontinuierlichen Abfolge stufenartig übereinander liegend angeordnet. Das gemäß den Figuren 1A und 6A untere Teleskopglied 2 ist ausgelegt, in Einbaulage mit seiner hier unterseitigen gesamten konkaven Seitenfläche 222 seines Abschnitts 21 den Innenraum der Werkzeugmaschine zu begrenzen. Entsprechend ist das gemäß den Figuren 1A und 6A obere Teleskopglied 2 ausgelegt, in Einbaulage mit seiner gesamten nach oben weisenden konvexen Seitenfläche 221 seines Abschnitts 21 die Umgebung zur Werkzeugmaschine zu begrenzen.

In den hier gezeigten Ausführungsformen der Teleskopabdeckung 1 sind die Teleskopglieder 2 bezüglich der Verfahrrichtung v miteinander bewegungsgekoppelt. Damit wird die Bewegung der Teleskopglieder 2 in Verfahrrichtung v synchronisiert. Sie sind über eine übliche Scherenmechanik 6 miteinander bewegungsgekoppelt. Dank der Scherenmechanik 6 können alle Teleskopglieder 2 gleichzeitig miteinander bewegt werden. Die Scherenmechanik 6 weist hier zwei parallele gleichwirkende Gelenkketten 61 aus in Verfahrrichtung v aneinander gereihten Scherenhebelelementen 62 auf. Diese sind jeweils aus zwei in einem Kreuzungspunkt 63 schwenkbeweglich gehaltenen Stäben 64 als Hebel ausgebildet. Die Scherenhebelelemente 62 sind jeweils an den Enden der Stäbe 64 drehbeweglich miteinander verbunden. Jedes einzelne der mit der Scherenmechanik 6 verbundenen Teleskopglieder 2 ist mit dem Kreuzungspunkt 63 des ihm zugeordneten Scherenhebelelementes 62 verbunden. Hierzu weisen die Teleskopglieder 2 für jeden Kreuzungspunkt 63 der Gelenkketten 61 einen Drehpunkt 66 auf, an dem der zugeordnete Kreuzungspunkt drehbeweglich gelagert ist. Montagefreundlich sind die Kreuzungspunkte 63 an den Drehpunkten 66 aufgeclipst. Da zwei parallele Gelenkketten 61 vorgesehen sind, weisen die Teleskopglieder 2 jeweils zwei Drehpunkte 66 für jeweils ein Scherenelement 62 der Gelenkketten 61 auf. An jedem Teleskopglied 2 ist ein sich in erster Querrichtung q1 längserstreckender Längsvorsprung 65 vorgesehen. An diesem ist beidendseitig jeweils einen Drehpunkt 66 angeordnet, wobei die Drehpunkte 66 in erster Querrichtung q1 voneinander beabstandet und zwar bezüglich einer mittigen Längsachse parallel zur Verfahrrichtung v spiegelsymmetrisch angeordnet sind. Die Scherenmechanik 6 ist hier an den konkaven Seitenflächen 222 der Teleskopglieder 2 angeordnet. Damit befindet sie sich in Einbaulage geschützt im Innenraum der hier nicht gezeigten Werkzeugmaschine.

In den Ausführungsformen der Maschinenabdeckung 1 gemäß den Figuren 1-5 sind die Führungsschienen 3 jeweils als Nut 31 und gemäß den Figuren 6-7 jeweils als Rinne 32 ausgebildet. Diese sind in Einbaulage in die Maschinenabdeckung 1 zu den Teleskopgliedern 2 hin und zueinander weisend seitlich geöffnet ausgebildet. Sie weisen bezüglich der Verfahrrichtung ein U-förmiges Querschnittsprofil auf. In den Führungsschienen 3 sind die Teleskopglieder 2 gleitverschieblich hier linear geführt angeordnet. Wie üblich, sind die in Verfahrrichtung v beiden äußeren Teleskopglieder 2 lageunveränderlich zu den Führungsschienen 3 gehalten angeordnet.

Zum Eingriff in die jeweilige Führungsschiene 3 weisen die Teleskopglieder 2 jeweils bezüglich der ersten Querrichtung q1 beidendseitig jeweils einen weiteren Abschnitt 24 auf. Dieser erstreckt sich in erster Querrichtung q1 von dem bogenförmigen mittleren Abschnitt 21 weg. Der weitere Abschnitt 24 der Teleskopglieder 2 ist dem Querschnitt der ihm zugeordnete Führungsschiene 3 angepasst ausgebildet.

Zu den Ausführungsformen der Teleskopabdeckung 1 gemäß den Figuren 2-4 gewandt, ist der weitere Abschnitt 24 der Teleskopglieder 2 rippenartig ausgebildet. Es sind in den Ausschnittvergrößerungen ID, IVB und VB in Figuren 1D, 4B und 5B aus Figuren 1C, 4A bzw. 5A gezeigt. Gemäß diesen weist der weitere Abschnitt 24 bezüglich der ersten Querrichtung Q1 einen rechtwinkligen Querschnitt auf. Ferner sind die hier als zueinander parallele Nuten 31 ausgebildeten Führungsschienen 3 unaufwendig blockweise zusammengefasst. Es sind die einen der pro Teleskopglieder 2 vorgesehenen beiden Führungsschienen 3 in einem Block 3a und die anderen der pro Teleskopglieder (2) vorgesehenen beiden Führungsschienen (3) in einem anderem Block 3b angeordnet. Die Blöcke 3a und 3b sind baugleich. Ferner weist die Teleskopabdeckung 1 eine ungerade Anzahl an Teleskopgliedern 2, hier sieben Teleskopglieder 2 auf, wobei das in der Abfolge mittlere, hier dritte Teleskopglied 2, das Fenster 23 aufweist. Das Fenster 23 ist bezüglich der ersten Querrichtung q1 und der Verfahrrichtung v mittig angeordnet.

In weiterer Vereinfachung der Teleskopabdeckung 1 sind die Teleskopglieder 2 gemäß den Figuren 6-7 paarweise zu einem erweiterten Teleskopglied 25 zusammengefasst. Es sind jeweils die beiden Teleskopglieder 2, die in einer Nullposition bezüglich einer mittigen Symmetrieebene S2 senkrecht zur Verfahrrichtung v symmetrisch zueinander angeordnet, paarig zusammengefasst. Wie Figur 7 entnehmbar, sind die beiden bezüglich der Symmetrieebene S2 äußeren Teleskopglieder zu einem erweiterten Teleskopglied 25 zusammengefasst. Dieses erweiterte Teleskopglied 25 ist ortsfest angeordnet. Ferner sind schrittweise die hierzu jeweils benachbarten beiden Teleskopglieder 2 über deren weiteren Abschnitte 24 fest miteinander verbunden. In allen Fällen sind die weiteren Abschnitte 24 in dem erweiterten Teleskopglied 25 quasi sich in Verfahrrichtung v zueinander erstreckend verlängert und miteinander einstückig verbunden ausgebildet. Es bleibt der bezüglich der Verfahrrichtung v axiale Abstand A, über den die beiden Teleskopglieder 2 in der Nullposition voneinander beabstandet angeordnet sind, in dem erweiterten Teleskopglied 25 unverändert erhalten.

Ferner ist der weitere Abschnitt 24 der Teleskopglieder 2 gemäß den Figuren 6 und 7 als seitlich geöffnete Rinne 32 mit einem zur Verfahrrichtung v ringabschnittsartigen Querschnitt ausgebildet. Es dienen die beiden Rinnen 32 eines Teleskopgliedes 2 dem bezüglich der Verfahrrichtung v der Teleskopabdeckung 1 radial nach innen benachbarten Teleskopglied 2 als Führungsschienen 2. Das heißt, das innen benachbarte Teleskopglied 2 ist, gleitverschieblich und linear geführt, in den als Rinnen 32 ausgebildeten weiteren Abschnitten 24 des zu ihm nach außen hin benachbarten Teleskopglieds 2 angeordnet. Somit bilden die weiteren Abschnitte 24 eines radial außen liegenden Teleskopgliedes 2 die Führungsschienen 2 bzw. die Rinnen 32 für das zu ihm radial innen benachbarte Teleskopglied 2. Das bezüglich der Verschiebungsrichtung v radial äußere bzw. bezüglich der zweiten Querrichtung q2 hintere Teleskopglied 2 ist statisch in der Teleskopabdeckung 1 angeordnet, während die übrigen Teleskopglieder 2 in Verschiebungsrichtung v relativ zueinander bewegbar in der Teleskopabdeckung 1 angeordnet sind. Die beiden Rinnen 32 eines Teleskopgliedes 2 sind somit dem zu ihm benachbarten Teleskopglied zugeordnet, dessen konvexe Seitenfläche 221 ihm zugewandt ist. Die beiden Rinnen 32 eines Teleskopgliedes 2 sind dem zu ihm benachbarten Teleskopglied 2 zugeordnet, dessen konvexe Seitenfläche 221 sich zu ihm hin wölbt. Somit sind die Rinnen 32 ineinander geschachtelt, wobei sich in Einbaulage eine innere Rinne 32 in die zu ihr benachbarte äußere Rinne 32 schmiegt.

Das bezüglich der Verfahrrichtung v mittlere erweiterte Teleskopglied 25 weist die Fensteröffnung 23 auf. Desgleichen weisen auch die übrigen erweiterten Teleskopglieder 25 infolge der Beabstandung der sie bildenden paarigen Teleskopglieder 2 jeweils eine Durchgangsöffnung 231 auf. Deren jeweilige bezüglich der Verfahrrichtung v axiale Erstreckung ist jedoch größer als die axiale Erstreckung des Fensters 23 des inneren erweiterten Teleskopgliedes 25. Dies ist so bemessen, dass die Fensteröffnung 23 des mittleren erweiterten Teleskopglieds 25 in keiner Position über den Verfahrweg w auch nicht partiell von einem der übrigen erweiterten Teleskopglieder 25 verdeckt wird.

Zueinander benachbarte Teleskopglieder 2 sind über einen Spalt 4 voneinander beabstandet angeordnet. Der Spalt 4 wird mittels einer Dichtung 5 dichtend überbrückt. Es ist an einem von zwei dichtend zueinander angeordneten Teleskopgliedern 2 bezüglich der Verfahrrichtung v beidendseitig jeweils eine Dichtungslippe 51 vorgesehen. Diese liegt in Einbaulage dichtend an dem anderen Teleskopglied 2 und überdies dichtend an den jeweils beiden zugeordneten Führungsschienen 3 an. Die Dichtungslippe 51 eines jeden Teleskopgliedes 2 erstreckt sich in einer Richtung parallel oder etwa parallel zur zweiten Querrichtung q2 von dessen konkaven Seitenflächen 222 zu der konvexen Seitenfläche 221 des in zweiter Querrichtung q2 benachbarten Teleskopliedes 2 hin.

Ferner liegt die Dichtungslippe 51 fußseitig dichtend an der Führungsschiene 2 an, von der sie ausgeht. Eine Dichtungswirkung wird in der Ausführungsform gemäß den Figuren 1 und 2 oder Figuren 5 und 6 dadurch erzielt, dass der Querschnitt des weiteren Abschnitts 24 dem der Nut 31 bzw. dem der Rinne 32 angepasst ist. Wie Figuren 1C und 1D entnehmbar, weist die Dichtungslippe 51 bezüglich der ersten Querrichtung q1 beidendseitig jeweils einen Absatz 52 mit einer in Verfahrrichtung v verlaufenden Kante 54 auf.

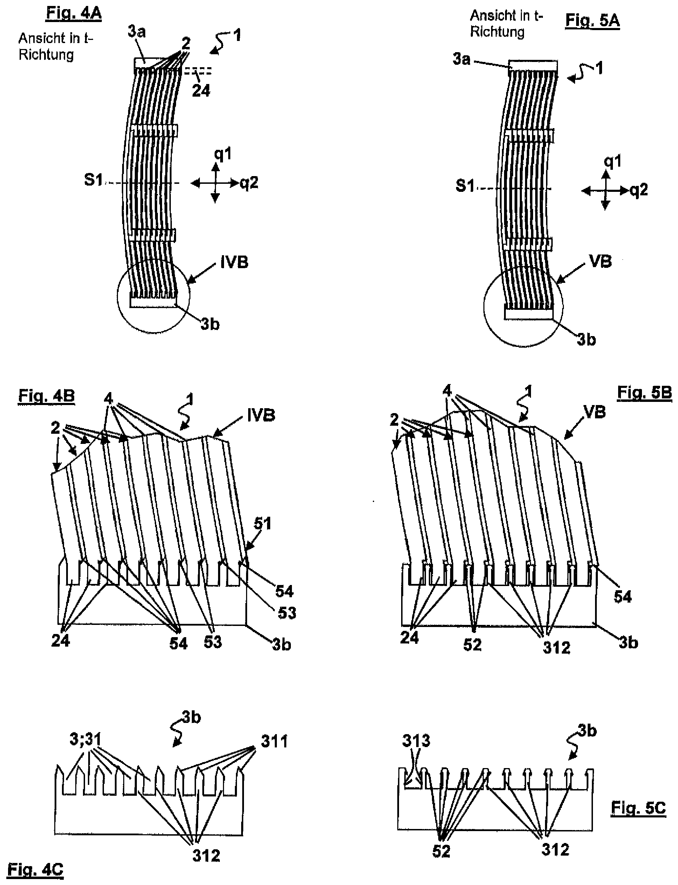

Gemäß Figuren 1C und 1D ist die Oberseite 311 einer die zugeordnete Nut 31 begrenzenden Wandung 312 als Dichtungsfläche ausgebildet, an der die Dichtungslippe 51 mit ihrem Absatz 52 dichtend anliegt. Gemäß Figuren 4A-4C ist diese Oberseite 311 zur Spiegelsymmetrieebene E1 hin abgeschrägt, wobei die Dichtungslippe 51 mit ihrer Kante 54 dichtend an der abgeschrägten Oberseite 311 angreift. Gemäß Figuren 5A-5C sind an beiden Innenseitenflächen 313 der Nuten 31 jeweils zusätzliche Dichtungslippen 51 vorgesehen, die seitlich dichtend an dem weiteren Abschnitt 24 des zugeordneten Teleskopglieds 2 angreifen. Um mögliche Kombinationen dieser drei Dichtungsmaßnahmen anzudeuten, sitzt überdies in Figuren 5A-5C die Dichtungslippe 51, wie in Figur 1C-1D, mit ihrem Absatz 52 dichtend an der Oberseite 311 an.

Sämtliche Teleskopglieder 2; 25 sind einstückig ausgebildet. Sie sind jeweils mittels additiver Fertigung einstückig aus Kunststoff hergestellt.

In den Figuren 2D und 2E ist jeweils eine Seitenansicht einer Ausführungsform eines Teleskopgliedes 2 dargestellt. Hiernach kann dessen konkave Seitenfläche 222 gemäß Figur 2D glatt oder, gemäß Figur 2E, mit einer Verstärkungsstruktur 7 hier aus einem Netz aus parallelen Rippen 71 überzogen ausgebildet versehen sein. Bei beiden ragt der Vorsprung 65 in zweiter Querrichtung q2 vor. Dieser ist Material sparend ebenfalls mit einer Verstärkungsstruktur 7 versehen.

### Bezugszeichenliste

- 1: Teleskopabdeckung
- 2: Teleskopglied
- 21: Abschnitt
- 22: Seitenfläche
- 221: konvexe Seitenfläche
- 222: konkave Seitenfläche
- 23: Fensteröffnung
- 231: Durchgangsöffnung
- 24: weiterer Abschnitt
- 25: erweitertes Teleskopglied
- 3: Führungsschiene
- 3a: Block
- 3b: Block
- 31: Nut
- 311: Oberseite
- 312: Wandung
- 313: Innenseitenfläche
- 32: Rinne
- 4: Spalt
- 5: Dichtung
- 51: Dichtungslippe
- 52: weitere Dichtungslippe
- 53: Absatz
- 54: Kante
- 6: Scherenmechanik
- 61: Gelenkkette
- 62: Scherenhebelelement
- 63: Kreuzungspunkt
- 64: Stab
- 65: Vorsprung
- 66: Drehpunkt
- 7: Verstärkungsstruktur
- 71: Rippe
- A: Abstand
- a: Abstand
- S1: Spiegelsymmetrieebene
- S2: Symmetrieebene
- q1: erste Querrichtung
- q2: zweite Querrichtung
- v: Verfahrrichtung

## Patentansprüche

1. Teleskopabdeckung (1) für eine Werkzeugmaschine, wobei die Teleskopabdeckung (1) mehrere Teleskopglieder (2) aufweist, die, in einer Verfahrrichtung (v) geführt, relativ zueinander über einen Verfahrweg (w) hin und her verfahrbar angeordnet sind, wobei die Teleskopglieder (2) sich bezüglich der Verfahrrichtung einander überlappend und bezüglich einer ersten Querrichtung (q1) senkrecht zur Verfahrrichtung von einem in einer Verfahrrichtung ersten Teleskopglied (2) bis zu einem in der Verfahrrichtung letzten Teleskopglied (2) kontinuierlich stufenartig ansteigend übereinanderliegend angeordnet sind und jeweils seitlich in zwei sich in Verfahrrichtung (v) erstreckenden und in einem Abstand (a) voneinander parallel beabstandeten Führungsschienen (3) geführt angeordnet sind, **wobei** die Teleskopglieder (2) jeweils einen Abschnitt (21) aufweisen, mit dem sie den Abstand (a) der ihnen zugeordneten Führungsschienen (3) unter Ausbildung eines durchgehend bogenförmigen Querschnitts in der ersten Querrichtung (q1) überbrücken, und jeweils bezüglich der ersten Querrichtung (q1) beidendseitig jeweils einen weiteren Abschnitt (24) aufweisen, der sich in erster Querrichtung (q1) von dem bogenförmigen Abschnitt (21) weg erstreckt und als in Einbaulage zu dem jeweils zugeordneten Teleskopglied (2) hin seitlich geöffnete Rinne (32) mit einem bezüglich der Verfahrrichtung ringabschnittsartigen Querschnitt ausgebildet ist, wobei die beiden Rinnen (32) eines Teleskopglieds (2) dem bezüglich der Verfahrrichtung der Teleskopabdeckung (1) radial nach innen benachbarten Teleskopglied (2) als Führungsschienen (3) zugeordnet sind und in Einbaulage zugleich zu ihrer Führung in die beiden Rinnen (32) des bezüglich der Verfahrrichtung der Teleskopabdeckung (1) radial nach außen benachbarten Teleskopglieds (2) eingreifen, **dadurch gekennzeichnet, dass** die Teleskopglieder (2) paarig jeweils zu einem erweiterten Teleskopglied (25) zusammengefasst und bezüglich der Verfahrrichtung (v) beabstandet zueinander angeordnet sind, wobei bezüglich einer Nullposition, in der sie bezüglich einer Symmetrieebene (S2) senkrecht zur Verfahrrichtung (v) symmetrisch angeordnet sind, die zur Symmetrieebene (S2) beiden äußeren Teleskopglieder (2) und, schrittweise zur Symmetrieebene (S2) hin, die hierzu jeweils benachbarten Teleskopglieder (2) über die ihnen zugeordneten beiden Rinnen (32) fest miteinander verbunden sind, wobei die Rinnen (32) in Verfahrrichtung zueinander erstreckend verlängert und miteinander zu einer Einheit zusammengefasst sind, die über ihre bezüglich der Verfahrrichtung gesamte axiale Erstreckung einen gleichen Querschnitt aufweist.

2. Teleskopabdeckung (1) nach Anspruch 1, **dadurch gekennzeichnet, dass** die Teleskopglieder (2) bezüglich einer zweiten Querrichtung (q2) senkrecht oder etwa senkrecht zur Verfahrrichtung (v) und ersten Querrichtung (q1) parallel zueinander angeordnet sind sowie zumindest in dem Abschnitt (21) zur Überbrückung des Abstands (a) zwischen den Führungsschienen (3) eine lamellenartige Form mit zwei bezüglich der ersten Querrichtung zueinander parallelen größeren Seitenflächen aufweisen, von denen eine als konkave Seitenfläche (222) und die andere als konvexe Seitenfläche (221) ausgebildet ist.

3. Teleskopabdeckung (1) nach Anspruch 2, **dadurch gekennzeichnet, dass** die konkave Seitenfläche (222) zur Begrenzung eines Innenraumes der Werkzeugmaschine und die konvexe Seitenfläche (221) zur Begrenzung einer Umgebung zum Innenraum der Werkzeugmaschine ausgelegt sind.

4. Teleskopabdeckung (1) nach einem der Ansprüche 1-3, **dadurch gekennzeichnet, dass** zumindest das bezüglich der Verfahrrichtung (v) mittig oder etwa mittig angeordnete Teleskopglied (2) eine Fensteröffnung (23) zur Durchführung eines Arbeitskopfes der Werkzeugmaschine aus dem Innenraum derselben heraus aufweist.

5. Teleskopabdeckung (1) nach einem der Ansprüche 1-4, **dadurch gekennzeichnet, dass** die Teleskopglieder (2) jeweils dichtend zu den in zweiter Querrichtung (q2) benachbarten Teleskopglieder (2) und/oder dichtend zu den jeweils zugeordneten Führungsschienen (3) angeordnet sind.

6. Teleskopabdeckung (1) nach einem der Ansprüche 1-5, **dadurch gekennzeichnet, dass** zumindest an einem von zwei dichtend zueinander angeordneten Teleskopgliedern (2) bezüglich der Verfahrrichtung (v) beidendseitig jeweils eine Dichtungslippe (51) vorgesehen ist, die in Einbaulage dichtend an dem anderen Teleskopglied (2) und/oder dichtend an der jeweils zugeordneten Führungsschiene (3) anliegt.

7. Teleskopabdeckung (1) nach Anspruch 6, **dadurch gekennzeichnet, dass** die Dichtungslippe (51) fußseitig dichtend an der Führungsschiene (3) anliegt.

8. Teleskopabdeckung (1) nach Anspruch 7, **dadurch gekennzeichnet, dass** sich die Dichtungslippe (51) eines jeden Teleskopgliedes (2) in einer Richtung parallel oder etwa parallel zur zweiten Querrichtung (q2) von dessen konkaven Seitenflächen (222) zu der konvexen Seitenfläche (221) des benachbarten Teleskopliedes (2) hin erstreckt.

9. Teleskopabdeckung (1) nach einem der Ansprüche 5 bis 8, **dadurch gekennzeichnet, dass** die Teleskopglieder (2) bezüglich der zweiten Querrichtung (q2) über einen Spalt (4) beabstandet zu den jeweils benachbarten Teleskopgliedern (2) angeordnet sind, wobei die Dichtungslippe (51) den Spalt (4) dichtend überbrückt.

10. Teleskopabdeckung (1) nach einem der Ansprüche 1 bis 9, **dadurch gekennzeichnet, dass** die Teleskopglieder (2) miteinander gekoppelt sind.

11. Teleskopabdeckung (1) nach einem der Ansprüche 1 bis 10, **dadurch gekennzeichnet, dass** die Teleskopglieder (2) über eine Scherenmechanik (6) miteinander bewegungsgekoppelt sind.

12. Teleskopabdeckung (1) nach einem der Ansprüche 1 bis 11, **dadurch gekennzeichnet, dass** die Teleskopglieder (2) jeweils zumindest an ihrer konkaven Seitenfläche (222) eine rippenartige Verstärkungsstruktur (7) aufweisen.

13. Teleskopabdeckung (1) nach einem der Ansprüche 1 bis 12, **dadurch gekennzeichnet, dass** die Teleskopglieder (2) jeweils einstückig aus Kunststoff gefertigt sind.

14. Teleskopabdeckung (1) einem der Ansprüche 1 bis 13, **dadurch gekennzeichnet, dass** die Teleskopglieder (2) mittels additiver Fertigung hergestellt sind.

## Claims

1. A telescopic cover (1) for a machine tool, wherein the telescopic cover (1) has a plurality of telescopic members (2) which are guided in a direction of travel (v) and are reciprocable relative to each other over a travel distance (w), wherein the telescopic members (2) are arranged in mutually overlapping relationship with respect to the direction of travel and are superimposed in a continuous step-like arising manner with respect to a first transverse direction (q1) perpendicular to the direction of travel from a telescopic member (2) which is first in the direction of travel to a telescopic member (2) which is last in the direction of travel and are respectively guided laterally in two guide rails (3) which extend in the direction of travel (v) and are spaced from each other in parallel relationship at a spacing (a), wherein the telescopic members (2) each have a portion (21) with which they bridge over the spacing (a) of the guide rails (3) associated therewith forming a continuously arcuate cross-section in the first transverse direction (q1) and each have a further portion (24) at both ends with respect to the first transverse direction (q1) which extends in the first transverse direction (q1) away from the arcuate portion (21) and which is configured as a channel (32) which is, in the installed position, laterally open towards the respective associated telescopic member (2) and has a cross-section in the manner of a ring portion with respect to the direction of travel, wherein the two channels (32) of a telescopic member (2) are associated with the telescopic member (2) which is radially inwardly adjacent with respect to the direction of travel of the telescopic cover (1) as guide rails (3) and, in the installed position, at the same time engage for their guidance into the two channels (32) of the telescopic member (2) which is adjacent radially outwardly with respect to the direction of travel of the telescopic cover (1), **characterized in that** the telescopic members (2) are combined together in paired relationship respectively to provide an enlarged telescopic member (25) and are arranged spaced apart from one another with respect to the direction of travel (v), wherein, with respect to a neutral position in which the telescopic members (2) are arranged in mirror-image symmetrical relationship with each other with respect to a plane of symmetry (S2) which is perpendicular to the direction of travel (v), the two telescopic members (2) which are outward relative to the plane of symmetry (S2) and further stepwise towards the plane of symmetry (S2) the two respective telescopic members (2) which are respectively adjacent thereto are arranged connected fixedly together by way of the associated channels (32), wherein the channels (32) are adapted to extend in prolonged fashion relative to each other in the direction of travel (v) and are combined together to constitute a unit which has an constant cross-section over its entirely axial extent which respect to the direction of travel.

2. A telescopic cover (1) as set forth in claim 1 **characterised in that** the telescopic members (2) are arranged with respect to a second transverse direction (q2) perpendicularly or approximately perpendicularly to the direction of travel (v) and relative to the first transverse direction (q1) parallel to each other and at least in the portion (21) for bridging the spacing (a) between the guide rails (3) are of a lamellar form with two larger side surfaces which are parallel to each other with respect to the first transverse direction and of which one is in the form of a concave side surface (222) and the other is in the form of a convex side surface (221).

3. A telescopic cover (1) as set forth in claim 2 **characterised in that** the concave side surface (222) is adapted to delimit an internal space in the machine tool and the convex side surface (221) is adapted to delimit a surroundings relative to the internal space in the machine tool.

4. A telescopic cover (1) as set forth in one of claims 1 through 3 **characterised in that** at least the telescopic member (2) which is arranged centrally or approximately centrally with respect to the direction of travel (v) has a window opening (23) for passing therethrough a working head of the machine tool out of the internal space thereof.

5. A telescopic cover (1) as set forth in one of claims 1 through 4 **characterised in that** the telescopic members (2) are respectively arranged in sealing relationship with the telescopic members (2) which are adjacent in the second transverse direction (q2) and/or are arranged sealingly in relation to the respectively associated guide rails (3).

6. A telescopic cover (1) as set forth in one of claims 1 through 5 **characterised in that** there are provided at least on one of two telescopic members (2) which are arranged in sealing relationship with each other at both ends with respect to the direction of travel (v) a respective sealing lip (51) which in the installation position respectively bears sealingly against the other telescopic member (2) and/or sealingly against the respectively associated guide rail (3).

7. A telescopic cover (1) as set forth in claim 6 **characterised in that** the sealing lip (51) bears at the foot side sealingly against the guide rail (3).

8. A telescopic cover (1) as set forth in claim 7 **characterised in that** the sealing lip (51) of each telescopic member (2) extends in a direction parallel or approximately parallel to the second transverse direction (q2) from its concave side surface (222) towards the convex side surface (221) of the adjacent cover member (2).

9. A telescopic cover (1) as set forth in one of claims 5 through 8 **characterised in that** the telescopic members (2) are arranged spaced by way of a gap (4) relative to the respectively adjacent telescopic members (2) with respect to the second transverse direction (q2), wherein the sealing lip (51) sealingly bridges over the gap (4).

10. A telescopic cover (1) as set forth in one of claims 1 through 9 **characterised in that** the telescopic members (2) are sealingly coupled together.

11. A telescopic cover (1) as set forth in one of claims 1 through 10 **characterised in that** the telescopic members (2) are motionally coupled together by way of a scissor mechanism (6).

12. A telescopic cover (1) as set forth in one of claims 1 through 11 **characterised in that** the telescopic members (2) respectively have a rib-like reinforcing structure (7) at least at their concave side surface (222).

13. A telescopic cover (1) as set forth in one of claims 1 through 12 **characterised in that** the telescopic members (2) are respectively made in one piece from plastic.

14. A telescopic cover (1) as set forth in one of claims 1 through 13 **characterised in that** the telescopic members (2) are produced by means of additive manufacture.

## Revendications

1. Couvercle télescopique (1) pour une machine-outil, le couvercle télescopique (1) présentant plusieurs éléments télescopiques (2) qui, guidés dans une direction de déplacement (v), sont disposés de manière à pouvoir se déplacer les uns par rapport aux autres dans un sens et dans l'autre sur une course (w), les éléments télescopiques (2) étant disposés de manière à se chevaucher les uns les autres par rapport à la direction de déplacement et, par rapport à une première direction transversale (q1) perpendiculaire à la direction de déplacement, à être superposés en montant en continu en gradins depuis un premier élément télescopique (2) dans une direction de déplacement jusqu'à un dernier élément télescopique (2) dans la direction de déplacement, et étant guidés latéralement dans deux rails de guidage (3) s'étendant dans la direction de déplacement (v) et espacés parallèlement les uns des autres d'une distance (a), dans lequel les éléments télescopiques (2) comportant chacun une partie (21) avec laquelle ils pontent la distance (a) des rails de guidage (3) qui leur sont associés en formant une section transversale continue en forme d'arc dans la première direction transversale (q1) et comportant chacun, par rapport à la première direction transversale (q1), à chaque extrémité, une autre partie (24) qui s'étend dans la première direction transversale (q1) et est conçue comme une gouttière (32) ouverte latéralement en position de montage vers l'élément télescopique (2) respectivement associé, avec une section transversale en forme de segment d'anneau par rapport à la direction de déplacement, les deux gouttières (32) d'un élément télescopique (2) étant associées à l'élément télescopique (2) radialement adjacent vers l'intérieur par rapport à la direction de déplacement du couvercle télescopique (1) en tant que rails de guidage (3) et s'engagent en même temps, en position de montage, dans les deux goulottes (32) de l'élément télescopique (2) radialement adjacent vers l'extérieur par rapport à la direction de déplacement du couvercle télescopique (1) pour leur guidage, **caractérisé en ce que** les éléments télescopiques (2) sont regroupés par paires pour former un élément télescopique élargi (25) et sont disposés à distance les uns des autres par rapport à la direction de déplacement (v), dans lequel, par rapport à une position zéro, dans laquelle ils sont disposés symétriquement par rapport à un plan de symétrie (S2) perpendiculaire à la direction de déplacement, les deux éléments télescopiques extérieurs (2) par rapport au plan de symétrie (S2) et, progressivement vers le plan de symétrie (S2), les éléments télescopiques respectivement adjacents à celui-ci sont reliés solidement l'un à l'autre par les deux goulottes (32) qui leur sont associées, les goulottes (32) s'étendant dans le sens de déplacement l'une par rapport à l'autre et étant regroupées en une unité qui présente une section transversale identique sur toute son extension axiale par rapport au sens de déplacement.

2. Couvercle télescopique (1) selon la revendication 1, **caractérisée en ce que** les éléments télescopiques (2) sont disposés parallèlement les uns aux autres perpendiculairement par rapport à une deuxième direction transversale (q2) perpendiculaire ou ou approximativement perpendiculaire à la direction de déplacement (v) et à la première direction transversale (q1), et présentent, au moins dans la section (21) pour ponter la distance (a) entre les rails de guidage (3), une forme lamellaire avec deux surfaces latérales plus grandes parallèles l'une à l'autre par rapport à la première direction transversale, dont l'une est conçue comme une surface latérale concave (222) et l'autre comme une surface latérale convexe (221).

3. Couvercle télescopique (1) selon la revendication 2, **caractérisée en ce que** la surface latérale concave (222) est conçue pour délimiter un espace intérieur de la machine-outil et la surface latérale convexe (221) est conçue pour délimiter un environnement par rapport à l'espace intérieur de la machine-outil.

4. Couvercle télescopique (1) selon l'une quelconque des revendications 1 à 3, **caractérisée en ce qu'**au moins l'élément télescopique (2) disposé au centre ou à peu près au centre par rapport à la direction de déplacement (v) présente une ouverture de fenêtre (23) pour faire passer une tête de travail de la machine-outil hors de l'espace intérieur de celle-ci.

5. Couvercle télescopique (1) selon l'une quelconque des revendications 1 à 4, **caractérisée en ce que** les éléments télescopiques (2) sont disposés de manière étanche par rapport aux éléments télescopiques (2) pouvant être déplacés dans une deuxième direction transversale (q2) et/ou de manière étanche par rapport aux rails de guidage respectivement associés.

6. Couvercle télescopique (1) selon l'une quelconque des revendications 1 à 5, **caractérisé en ce qu'**au moins sur l'un des deux éléments télescopiques (2) disposés de manière étanche l'un par rapport à l'autre, il est prévu, des deux côtés par rapport à la direction de déplacement (v), une lèvre d'étanchéité (51) qui, en position de montage, repose de manière étanche contre l'autre élément télescopique (2) et/ou de manière étanche contre le rail de guidage (3) associé.

7. Couvercle télescopique (1) selon la revendication 6, **caractérisée en ce que** la lèvre d'étanchéité (51) repose de manière étanche contre le rail de guidage (3) à l'extrémité inférieure.

8. Couvercle télescopique (1) selon la revendication 7, **caractérisée en ce que** la lèvre d'étanchéité (51) de chaque élément télescopique (2) s'étend dans une direction parallèle ou approximativement parallèle à la deuxième direction transversale (q2) de ses surfaces latérales concaves (222) vers la surface latérale convexe (221) de l'élément télescopique (2) adjacent.

9. Couvercle télescopique (1) selon l'une quelconque des revendications 5 à 8, **caractérisée en ce que** les éléments télescopiques (2) sont espacés les uns des autres par rapport à la deuxième direction transversale (q2) par un interstice (4) par rapport aux éléments télescopiques (2) respectivement adjacents, la lèvre d'étanchéité (51) pontant l'interstice (4) de manière étanche.

10. Couvercle télescopique (1) selon l'une quelconque des revendications 1 à 9, **caractérisée en ce que** les éléments télescopiques (2) sont couplés les uns aux autres.

11. Couvercle télescopique (1) selon l'une quelconque des revendications 1 à 10, **caractérisée en ce que** les éléments télescopiques (2) sont couplés entre eux de manière mobile par un mécanisme à ciseaux (6).

12. Couvercle télescopique (1) selon l'une quelconque des revendications 1 à 11, **caractérisée en ce que** les éléments télescopiques (2) présentent chacun au moins sur leur surface latérale concave (222) une structure de renfort (7) en forme de nervures.

13. Couvercle télescopique (1) selon l'une quelconque des revendications 1 à 12, **caractérisée en ce que** les éléments télescopiques (2) sont chacun fabriqués d'une seule pièce en matière plastique.

14. Couvercle télescopique (1) selon l'une quelconque des revendications 1 à 13, **caractérisée en ce que** les éléments télescopiques (2) sont fabriqués par fabrication additive.
